# EUROPEAN PATENT SPECIFICATION

(11) **EP 4 372 640 B1**
(45) Date of publication and mention of the grant of the patent: **29.04.2026**
(21) Application number: 23210200.4
(22) Date of filing: 15.11.2023
(51) Int. Cl.: G06Q 10/06, G08G 5/22, G08G 5/26, G08G 5/51, G08G 5/56, G08G 5/52

(54) **PRE-DEPARTURE SEQUENCING USING MULTI-AGENT REINFORCEMENT LEARNING**
SEQUENZIERUNG VOR DEM TEILNAHME UNTER VERWENDUNG VON MULTI-AGENT-VERSTÄRKUNGSLERNEN
SÉQUENÇAGE DE PRÉ-DÉPARTITION À L'AIDE D'UN APPRENTISSAGE PAR RENFORCEMENT MULTI-AGENTS

(30) Priority: 19.11.2022 IN 202211066536; 17.07.2023 US 202318222817
(43) Date of publication of application: 22.05.2024
(73) Proprietor: Arinc Incorporated, Annapolis, MD 21401 (US)
(72) Inventor: BASA, Kumar Vamsi Jnana, Anaparthi, AP (IN); CHANDRAHAS, Rohit, Kozhikode, KL (IN); TYAGI, Shivang, Bengaluru, KA (IN)
(74) Representative: Dehns

(56) References cited:
- US-B2- 10 210 766
- ALI HASNAIN ET AL: "Deep Reinforcement Learning Based Airport Departure Metering", 2021 IEEE INTERNATIONAL INTELLIGENT TRANSPORTATION SYSTEMS CONFERENCE (ITSC), IEEE, 19 September 2021 (2021-09-19), pages 366 - 371, XP033993982, DOI: 10.1109/ITSC48978.2021.9565012
- ALI HASNAIN ET AL: "A Deep Reinforcement Learning Approach for Airport Departure Metering Under Spatial-Temporal Airside Interactions", vol. 23, no. 12, 1 December 2022 (2022-12-01), pages 23933 - 23950, XP011929735, ISSN: 1524-9050, Retrieved from the Internet <URL:https://ieeexplore.ieee.org/document/9565012> [retrieved on 20220930], DOI: 10.1109/TITS.2022.3209397
- YANG YONGJIAN ET AL: "Multiagent Reinforcement Learning-Based Taxi Predispatching Model to Balance Taxi Supply and Demand", vol. 2020, 19 February 2020 (2020-02-19), US, pages 1 - 12, XP093142224, ISSN: 0197-6729, Retrieved from the Internet <URL:https://downloads.hindawi.com/journals/jat/2020/8674512.pdf> [retrieved on 20240318], DOI: 10.1155/2020/8674512

## Description

### PRIORITY

The present application claims the benefit under 35 U.S.C. § 119(a) of Indian Patent App. No. 202211066536 (filed November 19, 2022).

### BACKGROUND

Aircraft delays are common at busy airports, and the aircraft are frequently queued at holding points. Airports are working to optimize operating efficiency and throughput, and minimize congestion on taxi ways. Airport Collaborative Decision Making (A-CDM) is a standardized airport operations management method that optimizes resource utilization and improves air traffic predictability. For an airport to become A-CDM compliant, it must implement pre-departure sequencing. In most situations today, the air traffic management applies the principle of "first come first served" that often leads to queuing near the runway threshold with corresponding long wait times and high fuel consumption. Aircraft are often queued based on Target Takeoff Time (TTOT), airport holding point threshold values, and runway capacity. Existing routing systems cause high taxiway / runway congestion, high fuel burn with corresponding carbon emissions, reduced airport capacity, high turnaround time, inefficient ramp utilization, and inflexibility in the face of adverse conditions. It is imperative that terminal-area operations, particularly airport ground operations, are planned safely and efficiently to meet expected increases in demand. Ali Hasnain et al. "Deep Reinforcement Learning Based Airport Departure Metering*"* trains a departure metering agent using deep reinforcement learning.

### SUMMARY

In one aspect, embodiments of the inventive concepts disclosed herein are directed to a system and method that instantiates independent agent processes for each aircraft in a pre-departure sequence. Each independent agent is trained via multi-agent reinforcement machine learning with an existing set of data to maximize that agent's individual reward within established bounds and while cooperating with each other agent. The interaction of the independent agents produces an optimized pre-departure sequence.

In a further aspect, the individual reward is defined with respect to a change between the current timestamp and the newly suggested timestamp. A lower delta results in a higher reward.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
- FIG. 1: shows a block diagram view of a system for pre-departure sequencing according to an exemplary embodiment;
- FIG. 2: shows a flowchart of a method for pre-departure sequencing according to an exemplary embodiment;
- FIG. 3: shows a block representation of an exemplary embodiment;
- FIG. 4: shows block representations of aircraft taxing according to an exemplary embodiment;
- FIG. 5: shows a block representation of an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to a system and method that instantiates independent agent processes for each aircraft in a pre-departure sequence. Each independent agent is trained via multi-agent reinforcement machine learning with an existing set of data to maximize that agent's individual reward within established bounds and while cooperating with each other agent. The interaction of the independent agents produces an optimized pre-departure sequence. The individual reward is defined with respect to a change between the current timestamp and the newly suggested timestamp. A lower delta results in a higher reward.

Pre-departure sequencing is one of six concept elements that must be implemented sequentially according to A-CDM. Takeoff and startup approval times are important milestones in pre-Departure Sequencing. When there is a simultaneous takeoff / landings of several aircraft, they queue up at the holding point.

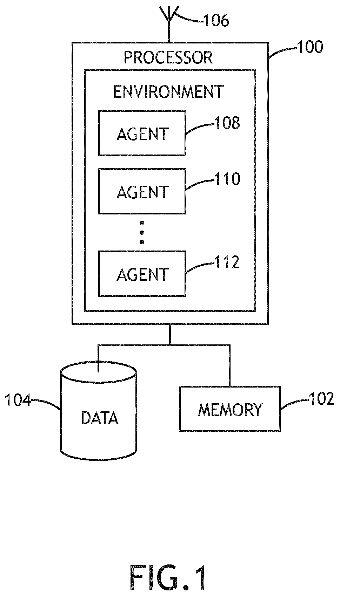

Referring to FIG. 1, a block diagram view of a system for pre-departure sequencing according to an exemplary embodiment is shown. The system includes a processor 100, memory 102 connected to the processor 100 for embodying processor executable code, a data storage device 104 connected to the processor 100, and a data communication device 106 connected to the processor 100. In at least one embodiment, the data storage device 104 may store historical data for training a multi-agent reinforcement machine learning algorithm to enable independent agents 108, 110, 112 to make independent sequencing decisions as more fully described herein. In at least one embodiment, the data storage device 104 may store data pertaining to specific aircraft associated with the independent agents 108, 110, 112 including a current state of the aircraft, airport facilities, aircraft schedules, etc.

In at least one embodiment, each independent agent 108, 110, 112 is configured to receive data from the data storage device and the data communication device 106. Each independent agent 108, 110, 112 processes the data via a trained artificial intelligence, and communicates with each other independent agent 108, 110, 112 to propose a pre-departure sequence. Each independent agent 108, 110, 112 produces a proposed pre-departure sequence to maximize that agent's 108, 110, 112 "reward" as defined by the artificial intelligence, with a solution comprising a pre-departure sequence resulting in the maximum total reward for all independent agents 108, 110, 112. The solution is then communicated to the aircraft via air traffic control. The solution may define target engine startup approval time (TSAT) and departing runway for each aircraft.

In at least one embodiment, the independent agents 108, 110, 112 are trained via multi-agent reinforcement learning to optimize the pre-departure sequence and perform runway allocation. The independent agents 108, 110, 112 may be trained using data including factors such as aircraft size, runway orientation and capacity, separation times, arriving aircraft, ground conditions, weather conditions, etc. The independent agent reward may be dependent on the change between the newly suggested and existing timestamp with a lower delta resulting in a higher reward. In at least one embodiment, the algorithm is trained on Historical data made available by external sources such as FlightAware, AirPlan / AODB, ADS-B sent through industry standard AIDX messaging system, etc. In at least one embodiment, the solution can be deployed in an airport moving map (AMM) system that provides pilots optimized taxi routing, obstacles awareness, and real-time traffic of surrounding aircraft. In at least one embodiment, runways are allocated according to factors such as departure direction, aircraft size, and weather conditions to further optimize airport operations.

In at least one embodiment, the processor 100 is configured to simulate the airport environment based on airport data from the data storage device 106 and weather conditions received via the data communication device 106. Each independent agents 108, 110, 112 is instantiated by the processor 100 to a specific aircraft.

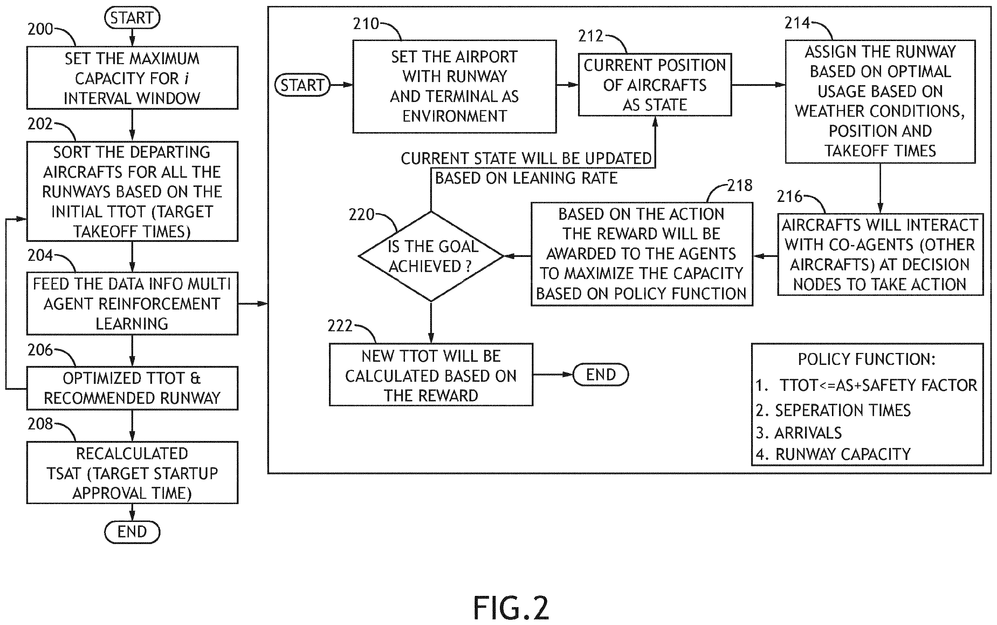

Referring to FIG. 2, a flowchart of a method for pre-departure sequencing according to an exemplary embodiment is shown. A system establishing a pre-departure sequence sets 200 or retrieves a maximum capacity for an interval window, and sorts 202 departing aircraft for all runways based on initial target takeoff times. The system then instantiates an independent agent for each aircraft and supplies 204 data to each independent agent to execute a trained multi-agent reinforcement machine learning algorithm; optimized target takeoff times are produced 206 and may be fed back to the initial target takeoff time for subsequent sorting 202 steps. Based on the produced 206 optimized target takeoff times, the system may recalculate 208 target startup approval times for each aircraft to conform to the optimized target takeoff times.

In at least one embodiment, the trained multi-agent reinforcement machine learning algorithm sets 210 a local airport as the environment, including the layouts of runways, taxiways, and terminals. For each independent agent, the current position of the aircraft is recorded 212 as an initial state, and a runway is assigned 214 for use based on weather conditions, aircraft capabilities, the initial state, takeoff times, etc. The system allows each independent agent to interact 216 at decision nodes; each independent agent is trained to determine some action for the aircraft. Based on the determined actions, each independent agent receives 218 a reward; the reward is defined by some metric or set of metrics to maximize airport capacity. The system then determines 220 if a predefined goal is achieved (i.e., a threshold aircraft capacity, accommodating all aircraft takeoff times, etc.), new target takeoff times are calculated 222; otherwise updated current positions are recorded 212 and the process continues.

In at least one embodiment, the reward metric is defined by factors including a minimum change in target takeoff time plus some predefined takeoff factor (i.e., smaller modifications to target takeoff times result in higher rewards), separation times, arrivals, runway capacity, etc. It may be appreciated at each step, the current state of each independent agent is considered.

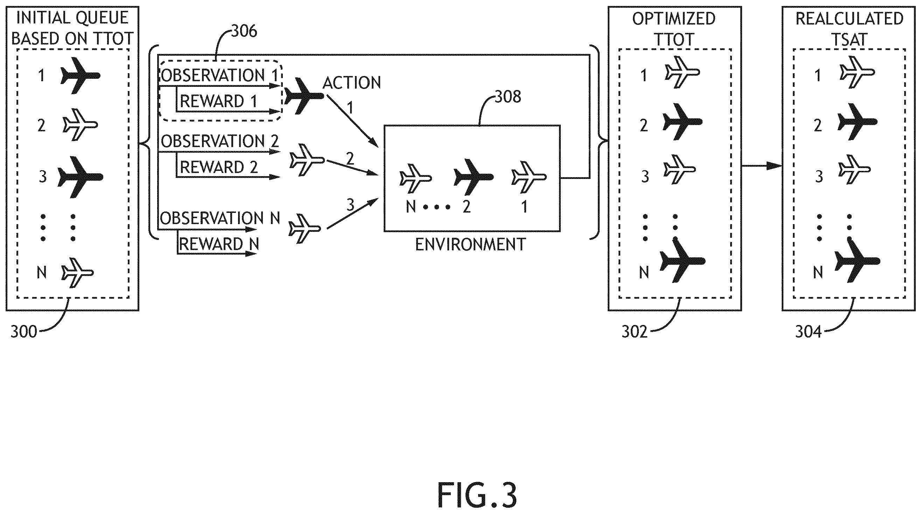

Referring to FIG. 3, a block representation of an exemplary embodiment is shown. A system performing pre-departure sequencing sorts departing aircraft for all runways based on an initial target takeoff time to produce an initial queue 300 for flights within some interval window of time. The number of flights considered (and interval window) may be based on the maximum runway and stand capacities and will vary from airport to airport.

The system than instantiates independent agents and the independent agents iteratively interact to select runways, taxiways, aircraft order, etc. The independent agents may consider various factors to self-arrange in an optimal order 302; the various factors may include weather conditions, aircraft characteristics, etc. In at least one embodiment, after the earliest departure is determined, that aircraft may be removed and the next flight in queue is added and a similar optimization is done. This is repeated for the whole queue.

Once an optimized order 302 is generated, the system may calculate target startup approval times 304 for the aircraft based on the optimized order 302.

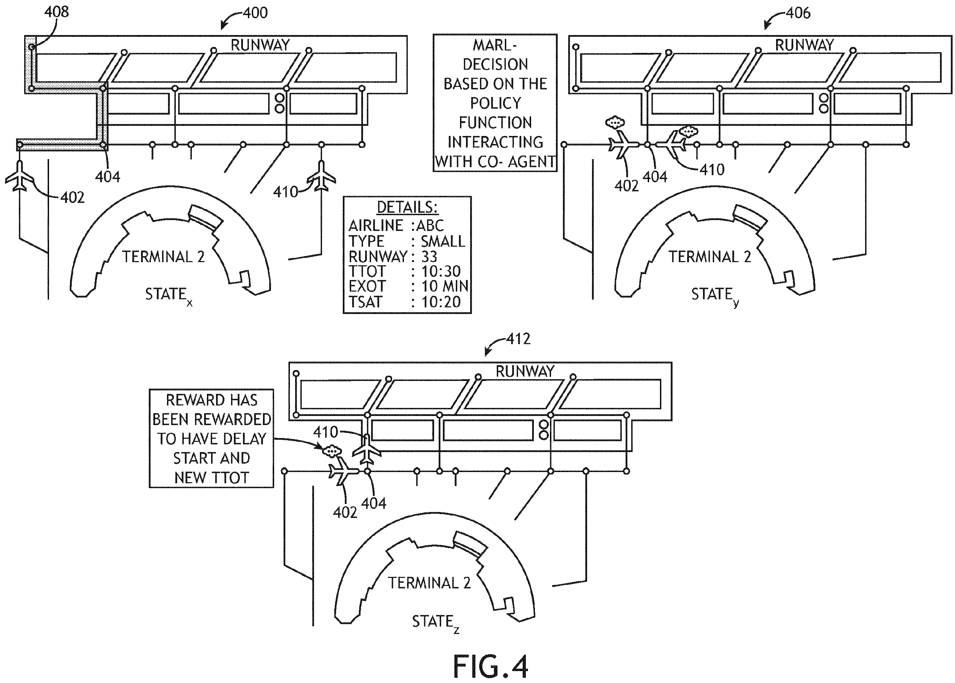

Referring to FIG. 4, block representations of aircraft taxing according to an exemplary embodiment are shown. A system performing pre-departure sequencing embodies a simulation of an entire airport as the environment 400, 406, 412. The system instantiates a plurality of independent agents 402, 410, each corresponding to an aircraft in the environment 400, 406, 412. The state of each independent agent 402, 410 changes dynamically based on its location and active independent agents 402, 410 at each node 404. The states of the independent agents 402, 410 are periodically updated based on their respective positions.

Each independent agent 402, 410 is required to make decisions at each node 404 on the path. In at least one embodiment, these decisions depend on, and influence, the upcoming and previous decisions of the independent agent 402, 410, and of other active independent agents 402, 410. The various paths and decisions at each node that the agent can take are the available "actions".

In at least one embodiment, the system employs multi-agent reinforcement learning. The reward is dependent on the policy, and the policy is determined by various factors such as runway capacity, arrivals, weather conditions, departure direction, existing target takeoff times, separation times, etc. The goal of each independent agent 402, 410 is to maximize the reward based on the policy.

Runway allocation is performed prior to pre-departure sequencing. In at least one embodiment, runways are allocated based on factors such as separation time, weather condition, take-off time, departure direction, runway capacity, and distance from the stand, giving the most optimized runway for each aircraft.

After runway allocation and pre-departure sequencing are optimized for the entire sequence, new modified target startup approval times are produced and provided to each aircraft corresponding to the independent agents 402, 410.

In one exemplary embodiment, at a first time in the simulated environment 400, a first aircraft agent 402 and a second aircraft agent 410 are each allocated the same runway. Furthermore, each aircraft agent 402, 410 may reference the same target takeoff time and target startup approval time.

At a second time in the simulated environment 406, each aircraft agent 402, 410 is predicted to approach a node 404 wherein some decision / action must be taken. At that point, the aircraft agents 402, 410 interact to determine all available actions, and each aircraft agent 402, 410 identifies the action that maximizes its own reward. In at least one embodiment, the system may also consider total rewards for all interacting aircraft agents 402, 410. At a third time in the simulated environment 412, the first aircraft agent 402 has maximized its reward by delaying in favor of the second aircraft agent 410 at the node 404, resulting in a delay to the target takeoff time for that aircraft.

Once actions are determined for all aircraft agents 402, 410 at all nodes 404, the system may calculate new target startup approval times based on those decisions, and provide those times to the actual aircraft. It may be appreciated that the aircraft agents 402, 410 may transit one or more nodes without interacting with any other aircraft agents 402, 410, but that decisions / actions may be determined for each of those nodes.

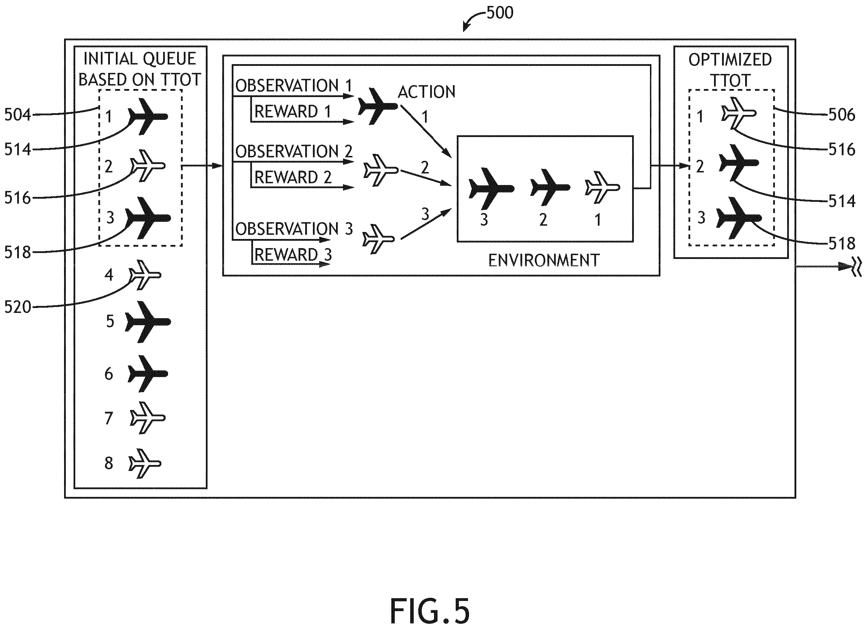

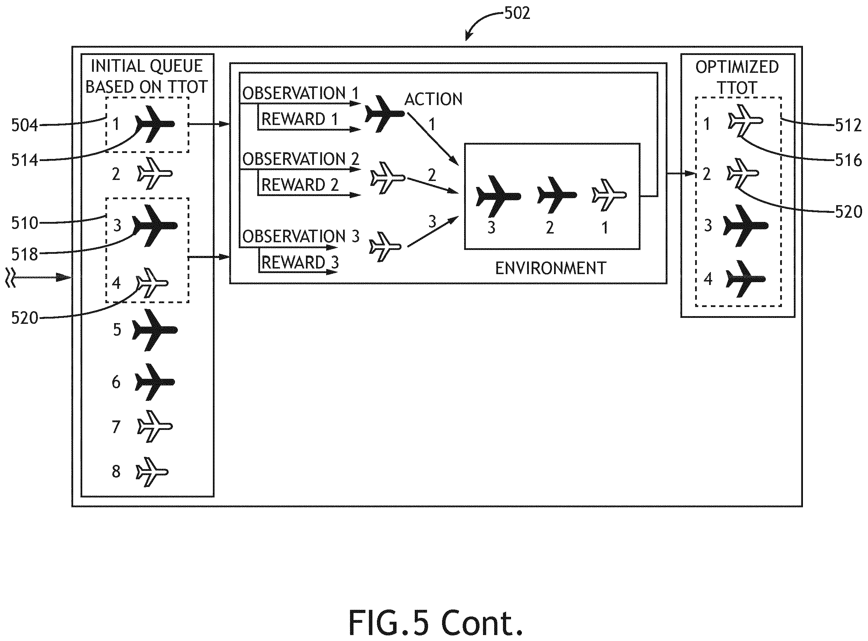

Referring to FIG. 5, a block representation of an exemplary embodiment is shown. A system performing pre-departure sequencing performs a first iterative optimization 500. The system defines a first interval window 504 including a first set of aircraft agents 514, 516, 518 ordered according to initial target takeoff times. The system executes a simulation including the airport environment, wherein each of the first set of aircraft agents 514, 516, 518 interact. All the aircraft agents 514, 516, 518 interact to maximize individual rewards based on a set policy to produce an optimized sequence 506.

In at least one embodiment, each aircraft agent 514, 516, 518 considers all the possible paths that it can take to get to the runway; if multiple aircraft agents 514, 516, 518 have overlapping paths, the path with the least overlap is chosen by both aircraft agents 54, 516, 518. The priority of passage at any point between multiple aircraft agents 514, 516, 518 depends on the aircraft target takeoff time and separation times.

In at least one embodiment, once the optimized sequence 506 for the first iterative optimization 500 is produced, the first aircraft agent 516 in the optimized sequence 506 is fixed and a second iterative optimization 502 begins. In the second iterative optimization, one or more additional aircraft agents 520 are added to the process. Interval windows 514, 510 for the second iterative optimization 502 may be defined to remove the first aircraft agent 516 from consideration as the first aircraft agent 516 is fixed in the optimized sequence 506.

In at least one embodiment, the second iterative optimization 502 produces an updated optimized sequence 512 including all of the aircraft agents 514, 516, 518, 520 processed so far, and the first aircraft agent 516, and second aircraft agent 520 are both fixed. The system continues to iteratively add the next marginal aircraft agent(s) in subsequent iterative optimization steps until all aircraft agents 514, 516, 518, 520 are included in the optimized sequence 506, 512. The system may then produce new target takeoff times for each aircraft agent 514, 516, 518, 520 in the optimized sequence 506, 512 and provide those times to the corresponding aircraft.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the broad scope of the inventive concepts disclosed herein or without sacrificing all of their material advantages; and individual features from various embodiments may be combined to arrive at other embodiments. The forms herein before described being merely explanatory embodiments thereof, it is the intention of the following claims to encompass and include such changes. Furthermore, any of the features disclosed in relation to any of the individual embodiments may be incorporated into any other embodiment.

## Claims

1. A computer apparatus comprising:
at least one processor (100) in data communication with a data communication device, a data storage device, and a memory storing processor (100) executable code for configuring the at least one processor (100) to:
retrieve an airport model from the data storage device; the airport model defining at least two or more runways, one or more taxiways, and one or more nodes;
instantiate a plurality of independent aircraft agents, each defining one or more aircraft characteristics and an initial target takeoff time;
allocate a runway to each independent aircraft agent;
simulate a departure sequence of each independent aircraft agent within the airport model based on the initial takeoff times;
determine that two or more independent aircraft agents have converged at a node;
execute a decision-making process in each of the two or more independent aircraft agents to determine an action for each of the two or more independent aircraft agents;
adjust one or more initial target takeoff times based on the determined actions; and
provide the adjusted target takeoff times to aircraft corresponding to the two or more independent aircraft agents via the data communication device;
**characterized in that** said runway is allocated based on at least a current position of an aircraft and one or more of separation time, weather condition, take-off time, departure direction, aircraft size, aircraft capabilities, runway capacity and distance from a stand;
iteratively execute decision-making processes until each of the plurality of independent aircraft agents is placed in an optimized pre-departure sequence; and
update the current position of the aircraft for each independent aircraft agent after each decision-making process.

2. The computer apparatus of Claim 1, wherein the decision-making process comprises a trained, multi-agent reinforcement machine learning algorithm, optionally wherein the multi-agent reinforcement machine learning algorithm defines a decision reward at least partially based on a deviation between the initial target takeoff time and the adjusted target takeoff time, and optionally wherein the decision-making process comprises each of the two or more independent aircraft agents maximizing that independent agent's reward.

3. The computer apparatus of any preceding Claim, wherein the at least one processor (100) is further configured to iteratively execute decision-making processes until each of the plurality of independent aircraft agents is placed in an optimized pre-departure sequence.

4. The computer apparatus of Claim 3, wherein the at least one processor (100) is further configured to segregate the plurality of independent aircraft agents into interval windows based on the initial target takeoff times, and optionally wherein the at least one processor (100) is further configured to:
iteratively fix a first independent aircraft agent in the optimized pre-departure sequence, and add a next marginal independent aircraft agent to the two or more independent aircraft agents during a subsequent iteration.

5. A method comprising:
retrieving an airport model; the airport model defining at least two or more runways, one or more taxiways, and one or more nodes;
instantiating a plurality of independent aircraft agents, each defining one or more aircraft characteristics and an initial target takeoff time;
allocating a runway to each independent aircraft agent;
simulating a departure sequence of each independent aircraft agent within the airport model based on the initial takeoff times;
determining that two or more independent aircraft agents have converged at a node;
executing a decision-making process in each of the two or more independent aircraft agents to determine an action for each of the two or more independent aircraft agents;
adjusting one or more initial target takeoff times based on the determined actions; and
providing the adjusted target takeoff times to aircraft corresponding to the two or more independent aircraft agents via the data communication device;
**characterized in that** said runway is allocated based on at least a current position of an aircraft and one or more of separation time, weather condition, take-off time, departure direction, aircraft size, aircraft capabilities, runway capacity and distance from a stand;
further comprising iteratively executing decision-making processes until each of the plurality of independent aircraft agents is placed in an optimized pre-departure sequence; and
updating the current position of the aircraft for each independent aircraft agent after each decision-making process.

6. The method of Claim 5, wherein the decision-making process comprises a trained, multi-agent reinforcement machine learning algorithm, optionally wherein the multi-agent reinforcement machine learning algorithm defines a decision reward at least partially based on a deviation between the initial target takeoff time and the adjusted target takeoff time, and optionally wherein the decision-making process comprises each of the two or more independent aircraft agents maximizing that independent agent's reward.

7. The method of any of Claims 5 to 7, further comprising iteratively executing decision-making processes until each of the plurality of independent aircraft agents is placed in an optimized pre-departure sequence.

8. The method of Claim 7, further comprising segregating the plurality of independent aircraft agents into interval windows based on the initial target takeoff times, and optionally. further comprising: iteratively fixing a first independent aircraft agent in the optimized pre-departure sequence, and add a next marginal independent aircraft agent to the two or more independent aircraft agents during a subsequent iteration.

9. An airport moving maps system comprising:
a data communication device;
a data storage device; and
at least one processor (100) in data communication with the data communication device, the data storage device, and a memory storing processor (100) executable code for configuring the at least one processor (100) to:
retrieve an airport model from the data storage device; the airport model defining at least two or more runways, one or more taxiways, and one or more nodes;
instantiate a plurality of independent aircraft agents, each defining one or more aircraft characteristics and an initial target takeoff time;
allocate a runway to each independent aircraft agent;
simulate a departure sequence of each independent aircraft agent within the airport model based on the initial takeoff times;
determine that two or more independent aircraft agents have converged at a node;
execute a decision-making process in each of the two or more independent aircraft agents to determine an action for each of the two or more independent aircraft agents;
adjust one or more initial target takeoff times based on the determined actions; and
provide the adjusted target takeoff times to aircraft corresponding to the two or more independent aircraft agents via the data communication device;
**characterized in that** said runway is allocated based on at least a current position of an aircraft and one or more of separation time, weather condition, take-off time, departure direction, aircraft size, aircraft capabilities, runway capacity and distance from a stand;
iteratively execute decision-making processes until each of the plurality of independent aircraft agents is placed in an optimized pre-departure sequence;
and update the current position of the aircraft for each independent aircraft agent after each decision-making process.

10. The airport moving maps system of Claim 9, wherein the decision-making process comprises a trained, multi-agent reinforcement machine learning algorithm.

11. The system of Claim 10, wherein the multi-agent reinforcement machine learning algorithm defines a decision reward at least partially based on a deviation between the initial target takeoff time and the adjusted target takeoff time.

12. The airport moving maps system of Claim 11, wherein the decision-making process comprises each of the two or more independent aircraft agents maximizing that independent agent's reward.

13. The airport moving maps system of Claim 12, wherein the at least one processor (100) is further configured to iteratively execute decision-making processes until each of the plurality of independent aircraft agents is placed in an optimized pre-departure sequence, and optionally wherein the at least one processor (100) is further configured to segregate the plurality of independent aircraft agents into interval windows based on the initial target takeoff times.

## Patentansprüche

1. Computereinrichtung, umfassend:
mindestens einen Prozessor (100) in Datenkommunikation mit einer Datenkommunikationsvorrichtung, einer Datenspeichervorrichtung und einem Speicher, der ausführbaren Code für den Prozessor (100) speichert, zum Konfigurieren des mindestens einen Prozessors (100) zum:
Abrufen eines Flughafenmodells aus der Datenspeichervorrichtung; wobei das Flughafenmodell mindestens zwei oder mehr Startbahnen, eine oder mehrere Rollbahnen und einen oder mehrere Knoten definiert;
Instanziieren einer Vielzahl von unabhängigen Luftfahrzeugagenten, wobei jeder ein oder mehrere Luftfahrzeugmerkmale und eine anfängliche Sollstartzeit definiert;
Zuweisen einer Startbahn zu jedem unabhängigen Luftfahrzeugagenten;
Simulieren einer Abflugfolge jedes unabhängigen Luftfahrzeugagenten innerhalb des Flughafenmodells basierend auf den anfänglichen Startzeiten;
Bestimmen, dass zwei oder mehr unabhängige Luftfahrzeugagenten an einem Knoten konvergiert sind;
Ausführen eines Entscheidungsfindungsprozesses in jedem der zwei oder mehr unabhängigen Luftfahrzeugagenten, um eine Aktion für jeden der zwei oder mehr unabhängigen Luftfahrzeugagenten zu bestimmen;
Anpassen einer oder mehrerer anfänglicher Sollstartzeiten basierend auf den bestimmten Aktionen; und
Bereitstellen der angepassten Sollstartzeiten an Luftfahrzeuge, die den zwei oder mehr unabhängigen Luftfahrzeugagenten entsprechen, über die Datenkommunikationsvorrichtung;
**dadurch gekennzeichnet, dass** die Startbahn basierend auf mindestens einer aktuellen Position eines Luftfahrzeugs und einem oder mehreren von Staffelungszeit, Wetterbedingung, Startzeit, Abflugrichtung, Luftfahrzeuggröße, Luftfahrzeugfähigkeiten, Startbahnkapazität und Entfernung von einem Abstellplatz zugewiesen wird;
iteratives Ausführen von Entscheidungsfindungsprozessen, bis jeder der Vielzahl von unabhängigen Luftfahrzeugagenten in einer optimierten Vorabflugfolge platziert ist; und
Aktualisieren der aktuellen Position des Luftfahrzeugs für jeden unabhängigen Luftfahrzeugagenten nach jedem Entscheidungsfindungsprozess.

2. Computereinrichtung nach Anspruch 1, wobei der Entscheidungsfindungsprozess einen trainierten Mehrfachagenten-Bestärkungslernalgorithmus umfasst, wobei optional der Mehrfachagenten-Bestärkungslernalgorithmus eine Entscheidungsbelohnung mindestens teilweise basierend auf einer Abweichung zwischen der anfänglichen Sollstartzeit und der angepassten Sollstartzeit definiert, und wobei optional der Entscheidungsfindungsprozess umfasst, dass jeder der zwei oder mehr unabhängigen Luftfahrzeugagenten die Belohnung dieses unabhängigen Agenten maximiert.

3. Computereinrichtung nach einem der vorhergehenden Ansprüche, wobei der mindestens eine Prozessor (100) ferner konfiguriert ist, Entscheidungsfindungsprozesse iterativ auszuführen, bis jeder der Vielzahl von unabhängigen Luftfahrzeugagenten in einer optimierten Vorabflugfolge platziert ist.

4. Computereinrichtung nach Anspruch 3, wobei der mindestens eine Prozessor (100) ferner konfiguriert ist, die Vielzahl von unabhängigen Luftfahrzeugagenten basierend auf den anfänglichen Sollstartzeiten in Intervallfenster einzuteilen, und wobei optional der mindestens eine Prozessor (100) ferner konfiguriert ist zum:
iterativen Fixieren eines ersten unabhängigen Luftfahrzeugagenten in der optimierten Vorabflugfolge und Hinzufügen eines nächsten marginalen unabhängigen Luftfahrzeugagenten zu den zwei oder mehr unabhängigen Luftfahrzeugagenten während einer nachfolgenden Iteration.

5. Verfahren, umfassend:
Abrufen eines Flughafenmodells; wobei das Flughafenmodell mindestens zwei oder mehr Startbahnen, eine oder mehrere Rollbahnen und einen oder mehrere Knoten definiert;
Instanziieren einer Vielzahl von unabhängigen Luftfahrzeugagenten, wobei jeder ein oder mehrere Luftfahrzeugmerkmale und eine anfängliche Sollstartzeit definiert;
Zuweisen einer Startbahn zu jedem unabhängigen Luftfahrzeugagenten;
Simulieren einer Abflugfolge jedes unabhängigen Luftfahrzeugagenten innerhalb des Flughafenmodells basierend auf den anfänglichen Startzeiten;
Bestimmen, dass zwei oder mehr unabhängige Luftfahrzeugagenten an einem Knoten konvergiert sind;
Ausführen eines Entscheidungsfindungsprozesses in jedem der zwei oder mehr unabhängigen Luftfahrzeugagenten, um eine Aktion für jeden der zwei oder mehr unabhängigen Luftfahrzeugagenten zu bestimmen;
Anpassen einer oder mehrerer anfänglicher Sollstartzeiten basierend auf den bestimmten Aktionen; und
Bereitstellen der angepassten Sollstartzeiten an Luftfahrzeuge, die den zwei oder mehr unabhängigen Luftfahrzeugagenten entsprechen, über die Datenkommunikationsvorrichtung;
**dadurch gekennzeichnet, dass** die Startbahn basierend auf mindestens einer aktuellen Position eines Luftfahrzeugs und einem oder mehreren von Staffelungszeit, Wetterbedingung, Startzeit, Abflugrichtung, Luftfahrzeuggröße, Luftfahrzeugfähigkeiten, Startbahnkapazität und Entfernung von einem Abstellplatz zugewiesen wird;
ferner umfassend das iterative Ausführen von Entscheidungsfindungsprozessen, bis jeder der Vielzahl von unabhängigen Luftfahrzeugagenten in einer optimierten Vorabflugfolge platziert ist; und
Aktualisieren der aktuellen Position des Luftfahrzeugs für jeden unabhängigen Luftfahrzeugagenten nach jedem Entscheidungsfindungsprozess.

6. Verfahren nach Anspruch 5, wobei der Entscheidungsfindungsprozess einen trainierten Mehrfachagenten-Bestärkungslernalgorithmus umfasst, wobei optional der Mehrfachagenten-Bestärkungslernalgorithmus eine Entscheidungsbelohnung mindestens teilweise basierend auf einer Abweichung zwischen der anfänglichen Sollstartzeit und der angepassten Sollstartzeit definiert, und wobei optional der Entscheidungsfindungsprozess umfasst, dass jeder der zwei oder mehr unabhängigen Luftfahrzeugagenten die Belohnung dieses unabhängigen Agenten maximiert.

7. Verfahren nach einem der Ansprüche 5 bis 7, ferner umfassend das iterative Ausführen von Entscheidungsfindungsprozessen, bis jeder der Vielzahl von unabhängigen Luftfahrzeugagenten in einer optimierten Vorabflugfolge platziert ist.

8. Verfahren nach Anspruch 7, ferner umfassend das Einteilen der Vielzahl von unabhängigen Luftfahrzeugagenten basierend auf den anfänglichen Sollstartzeiten in Intervallfenster, und optional ferner umfassend: das iterative Fixieren eines ersten unabhängigen Luftfahrzeugagenten in der optimierten Vorabflugfolge und Hinzufügen eines nächsten marginalen unabhängigen Luftfahrzeugagenten zu den zwei oder mehr unabhängigen Luftfahrzeugagenten während einer nachfolgenden Iteration.

9. Flughafenbewegungskartensystem, umfassend:
eine Datenkommunikationsvorrichtung;
eine Datenspeichervorrichtung; und
mindestens einen Prozessor (100) in Datenkommunikation mit der Datenkommunikationsvorrichtung, der Datenspeichervorrichtung und einem Speicher, der ausführbaren Code für den Prozessor (100) speichert, zum Konfigurieren des mindestens einen Prozessors (100) zum:
Abrufen eines Flughafenmodells aus der Datenspeichervorrichtung; wobei das Flughafenmodell mindestens zwei oder mehr Startbahnen, eine oder mehrere Rollbahnen und einen oder mehrere Knoten definiert;
Instanziieren einer Vielzahl von unabhängigen Luftfahrzeugagenten, wobei jeder ein oder mehrere Luftfahrzeugmerkmale und eine anfängliche Sollstartzeit definiert;
einer jeden unabhängigen Luftfahrzeugagenten eine Startbahn zuzuweisen;
eine Abflugfolge eines jeden unabhängigen Luftfahrzeugagenten innerhalb des Flughafenmodells basierend auf den anfänglichen Startzeiten zu simulieren;
zu bestimmen, dass zwei oder mehr unabhängige Luftfahrzeugagenten an einem Knoten konvergiert sind;
einen Entscheidungsfindungsprozess in jedem der zwei oder mehr unabhängigen Luftfahrzeugagenten auszuführen, um eine Aktion für jeden der zwei oder mehr unabhängigen Luftfahrzeugagenten zu bestimmen;
eine oder mehrere anfängliche Sollstartzeiten basierend auf den bestimmten Aktionen anzupassen; und
die angepassten Sollstartzeiten über die Datenkommunikationsvorrichtung an Luftfahrzeuge bereitzustellen, die den zwei oder mehr unabhängigen Luftfahrzeugagenten entsprechen;
**dadurch gekennzeichnet, dass** die Startbahn basierend auf mindestens einer aktuellen Position eines Luftfahrzeugs und einem oder mehreren von Staffelungszeit, Wetterbedingung, Startzeit, Abflugrichtung, Luftfahrzeuggröße, Luftfahrzeugfähigkeiten, Startbahnkapazität und Entfernung von einem Abstellplatz zugewiesen wird;
Entscheidungsfindungsprozesse iterativ auszuführen, bis jeder der Vielzahl von unabhängigen Luftfahrzeugagenten in einer optimierten Vorabflugfolge platziert ist;
und die aktuelle Position des Luftfahrzeugs für jeden unabhängigen Luftfahrzeugagenten nach jedem Entscheidungsfindungsprozess zu aktualisieren.

10. Flughafenbewegungskartensystem nach Anspruch 9, wobei der Entscheidungsfindungsprozess einen trainierten Mehrfachagenten-Bestärkungslernalgorithmus umfasst.

11. System nach Anspruch 10, wobei der Mehrfachagenten-Bestärkungslernalgorithmus eine Entscheidungsbelohnung zumindest teilweise basierend auf einer Abweichung zwischen der anfänglichen Sollstartzeit und der angepassten Sollstartzeit definiert.

12. Flughafenbewegungskartensystem nach Anspruch 11, wobei der Entscheidungsfindungsprozess umfasst, dass jeder der zwei oder mehr unabhängigen Luftfahrzeugagenten die Belohnung des jeweiligen unabhängigen Agenten maximiert.

13. Flughafenbewegungskartensystem nach Anspruch 12, wobei der mindestens eine Prozessor (100) ferner dazu konfiguriert ist, Entscheidungsfindungsprozesse iterativ auszuführen, bis jeder der Vielzahl von unabhängigen Luftfahrzeugagenten in einer optimierten Vorabflugfolge platziert ist, und wobei optional der mindestens eine Prozessor (100) ferner dazu konfiguriert ist, die Vielzahl von unabhängigen Luftfahrzeugagenten basierend auf den anfänglichen Sollstartzeiten in Intervallfenster aufzuteilen.

## Revendications

1. Appareil informatique comprenant :
au moins un processeur (100) en communication de données avec un dispositif de communication de données, un dispositif de stockage de données, et une mémoire stockant un code exécutable par processeur (100) pour configurer l'au moins un processeur (100) pour :
récupérer un modèle d'aéroport à partir du dispositif de stockage de données ; le modèle d'aéroport définissant au moins deux pistes ou plus, une ou plusieurs voies de circulation et un ou plusieurs nœuds ;
instancier une pluralité d'agents d'aéronefs indépendants, chacun définissant une ou plusieurs caractéristiques d'aéronef et une heure de décollage cible initiale ;
allouer une piste à chaque agent d'aéronef indépendant ;
simuler une séquence de départ de chaque agent d'aéronef indépendant au sein du modèle d'aéroport en fonction des heures de décollage initiales ;
déterminer que deux agents d'aéronef indépendants ou plus ont convergé au niveau d'un nœud ;
exécuter un processus de prise de décision dans chacun des deux agents d'aéronef indépendants ou plus pour déterminer une action pour chacun des deux agents d'aéronef indépendants ou plus ;
ajuster une ou plusieurs heures de décollage initiales cibles en fonction des actions déterminées ; et
fournir les heures de décollage cibles ajustées à l'aéronef correspondant aux deux agents d'aéronef indépendants ou plus par l'intermédiaire du dispositif de communication de données ;
**caractérisé en ce que** ladite piste est allouée en fonction au moins d'une position actuelle d'un aéronef et d'un ou plusieurs parmi une heure de séparation, des conditions météorologiques, une heure de décollage, une direction de départ, une taille d'aéronef, des capacités d'aéronef, une capacité de la piste et une distance par rapport à un emplacement de stationnement ;
exécuter de manière itérative les processus de prise de décision jusqu'à ce que chacun de la pluralité d'agents d'aéronef indépendants soit placé dans une séquence de pré-départ optimisée ; et
mettre à jour la position actuelle de l'aéronef pour chaque agent d'aéronef indépendant après chaque processus de prise de décision.

2. Appareil informatique selon la revendication 1, dans lequel le processus de prise de décision comprend un algorithme d'apprentissage automatique par renforcement multi-agent entraîné, dans lequel, éventuellement, l'algorithme d'apprentissage automatique par renforcement multi-agent définit une récompense de décision au moins partiellement en fonction d'un écart entre l'heure de décollage cible initiale et l'heure de décollage cible ajustée, et dans lequel, éventuellement, le processus de prise de décision comprend chacun des deux agents d'aéronef indépendants ou plus maximisant la récompense de cet agent indépendant.

3. Appareil informatique selon une quelconque revendication précédente, dans lequel l'au moins un processeur (100) est en outre configuré pour exécuter de manière itérative les processus de prise de décision jusqu'à ce que chacun de la pluralité d'agents d'aéronef indépendants soit placé dans une séquence de pré-départ optimisée.

4. Appareil informatique selon la revendication 3, dans lequel l'au moins un processeur (100) est en outre configuré pour segmenter la pluralité d'agents d'aéronef indépendants en fenêtres d'intervalle en fonction des heures de décollage cibles initiales, et, éventuellement, dans lequel l'au moins un processeur (100) est en outre configuré pour :
fixer de manière itérative un premier agent d'aéronef indépendant dans la séquence de pré-départ optimisée, et ajouter un agent d'aéronef indépendant marginal suivant aux deux agents d'aéronef indépendants ou plus lors d'une itération ultérieure.

5. Procédé comprenant :
la récupération d'un modèle d'aéroport ; le modèle d'aéroport définissant au moins deux pistes ou plus, une ou plusieurs voies de circulation et un ou plusieurs nœuds ;
l'instanciation d'une pluralité d'agents d'aéronefs indépendants, chacun définissant une ou plusieurs caractéristiques d'aéronef et une heure de décollage cible initiale ;
l'allocation d'une piste à chaque agent d'aéronef indépendant ; la simulation d'une séquence de départ de chaque agent d'aéronef indépendant au sein du modèle d'aéroport en fonction des heures de décollage initiales ;
la détermination que deux agents d'aéronef indépendants ou plus ont convergé au niveau d'un nœud ;
l'exécution d'un processus de prise de décision dans chacun des deux agents d'aéronef indépendants ou plus pour déterminer une action pour chacun des deux agents d'aéronef indépendants ou plus ;
l'ajustement d'une ou plusieurs heures de décollage initiales cibles en fonction des actions déterminées ; et
la fourniture des heures de décollage cibles ajustées à l'aéronef correspondant aux deux agents d'aéronef indépendants ou plus par l'intermédiaire du dispositif de communication de données ;
**caractérisé en ce que** ladite piste est allouée en fonction au moins d'une position actuelle d'un aéronef et d'un ou plusieurs parmi une heure de séparation, des conditions météorologiques, une heure de décollage, une direction de départ, une taille d'aéronef, des capacités d'aéronef, une capacité de la piste et une distance par rapport à un emplacement de stationnement ;
comprenant en outre l'exécution itérative des processus de prise de décision jusqu'à ce que chacun de la pluralité d'agents d'aéronef indépendants soit placé dans une séquence de pré-départ optimisée ; et
la mise à jour de la position actuelle de l'aéronef pour chaque agent d'aéronef indépendant après chaque processus de prise de décision.

6. Procédé selon la revendication 5, dans lequel le processus de prise de décision comprend un algorithme d'apprentissage automatique par renforcement multi-agent entraîné, dans lequel, éventuellement, l'algorithme d'apprentissage automatique par renforcement multi-agent définit une récompense de décision au moins partiellement en fonction d'un écart entre l'heure de décollage cible initiale et l'heure de décollage cible ajustée, et dans lequel, éventuellement, le processus de prise de décision comprend chacun des deux agents d'aéronef indépendants ou plus maximisant la récompense de cet agent indépendant.

7. Procédé selon l'une quelconque des revendications 5 à 7, comprenant en outre l'exécution itérative des processus de prise de décision jusqu'à ce que chacun de la pluralité d'agents d'aéronef indépendants soit placé dans une séquence de pré-départ optimisée.

8. Procédé selon la revendication 7, comprenant en outre la segmentation de la pluralité d'agents d'aéronef indépendants en fenêtres d'intervalle en fonction des heures de décollage cibles initiales, et, éventuellement, comprenant en outre : la fixation itérative d'un premier agent d'aéronef indépendant dans la séquence de pré-départ optimisée, et l'ajout d'un agent d'aéronef indépendant marginal suivant aux deux agents d'aéronef indépendants ou plus lors d'une itération ultérieure.

9. Système de cartes mobiles d'aéroport comprenant :
un dispositif de communication de données ;
un dispositif de stockage de données ; et
au moins un processeur (100) en communication de données avec le dispositif de communication de données, le dispositif de stockage de données, et une mémoire stockant un code exécutable par processeur (100) pour configurer l'au moins un processeur (100) pour :
récupérer un modèle d'aéroport à partir du dispositif de stockage de données ; le modèle d'aéroport définissant au moins deux pistes ou plus, une ou plusieurs voies de circulation et un ou plusieurs nœuds ;
instancier une pluralité d'agents d'aéronefs indépendants, chacun définissant une ou plusieurs caractéristiques d'aéronef et une heure de décollage cible initiale ;
allouer une piste à chaque agent d'aéronef indépendant ;
simuler une séquence de départ de chaque agent d'aéronef indépendant au sein du modèle d'aéroport en fonction des heures de décollage initiales ;
déterminer que deux agents d'aéronef indépendants ou plus ont convergé au niveau d'un nœud ;
exécuter un processus de prise de décision dans chacun des deux agents d'aéronef indépendants ou plus pour déterminer une action pour chacun des deux agents d'aéronef indépendants ou plus ;
ajuster une ou plusieurs heures de décollage initiales cibles en fonction des actions déterminées ; et
fournir les heures de décollage cibles ajustées à l'aéronef correspondant aux deux agents d'aéronef indépendants ou plus par l'intermédiaire du dispositif de communication de données ;
**caractérisé en ce que** ladite piste est allouée en fonction au moins d'une position actuelle d'un aéronef et d'un ou plusieurs parmi une heure de séparation, des conditions météorologiques, une heure de décollage, une direction de départ, une taille d'aéronef, des capacités d'aéronef, une capacité de la piste et une distance par rapport à un emplacement de stationnement ;
exécuter de manière itérative les processus de prise de décision jusqu'à ce que chacun de la pluralité d'agents d'aéronef indépendants soit placé dans une séquence de pré-départ optimisée ;
et mettre à jour la position actuelle de l'aéronef pour chaque agent d'aéronef indépendant après chaque processus de prise de décision.

10. Système de cartes mobiles d'aéroport selon la revendication 9, dans lequel le processus de prise de décision comprend un algorithme d'apprentissage automatique par renforcement multi-agent entraîné.

11. Système selon la revendication 10, dans lequel l'algorithme d'apprentissage automatique par renforcement multi-agents définit une récompense de décision au moins partiellement en fonction d'un écart entre l'heure de décollage cible initiale et l'heure de décollage cible ajustée.

12. Système de cartes mobiles d'aéroport selon la revendication 11, dans lequel le processus de prise de décision comprend chacun des deux agents d'aéronef indépendants ou plus maximisant la récompense de cet agent indépendant.

13. Système de cartes mobiles d'aéroport selon la revendication 12, dans lequel l'au moins un processeur (100) est en outre configuré pour exécuter de manière itérative les processus de prise de décision jusqu'à ce que chacun de la pluralité d'agents d'aéronef indépendants soit placé dans une séquence de pré-départ optimisée, et éventuellement dans lequel l'au moins un processeur (100) est en outre configuré pour segmenter la pluralité d'agents d'aéronef indépendants en fenêtres d'intervalle en fonction des heures de décollage cibles initiales.
